# DEMANDE DE BREVET EUROPEEN

(11) **EP 4 800 892 A1**
(43) Date de publication de la demande: **02.09.2026**
(21) Numéro de dépôt: 26161352.5
(22) Date de dépôt: 27.02.2026
(51) Int. Cl.: H02K 5/24

(54) **ACTIONNEUR ÉLECTROMÉCANIQUE, DISPOSITIF MOTORISÉ ET DISPOSITIF D OCCULTATION COMPRENANT UN TEL ACTIONNEUR**

(30) Priorité: 28.02.2025 FR 2502041
(71) Demandeur: Somfy Activites SA, 74300 Cluses (FR)
(72) Inventeur: DECONCHE, Sylvain, 74300 CLUSES (FR); LEPINE, Quentin, 74300 CLUSES (FR); LEMAITRE, Sébastien, 74300 CLUSES (FR); PETRIS, Anny-Laure, 74300 CLUSES (FR)
(74) Mandataire: Lavoix

(57) **Abrégé**

La présente invention concerne un actionneur électromécanique d'un dispositif d'occultation, cet actionneur comprenant au moins un moteur électrique, un carter, une carte électronique de commande (142) et un organe de filtrage mécanique de vibrations (50). Le moteur électrique, la carte électronique de commande (142) et l'organe de filtrage (50) sont montés à l'intérieur du carter, en configuration assemblée de l'actionner électromécanique. L'organe de filtrage mécanique (50) comprend une première partie (52) formant un filtre mécanique et une deuxième partie définissant un volume (V54) de réception de la carte électronique (142). En outre, l'organe de filtrage mécanique (50) est monobloc.

## Description

La présente invention concerne un actionneur électromécanique d'un dispositif d'occultation, ainsi qu'un dispositif d'entraînement motorisé pour l'entraînement d'un écran d'un dispositif d'occultation, comprenant, entre autres, un tel actionneur électromécanique. La présente invention concerne également un dispositif d'occultation comprenant, entre autres, un tel dispositif d'entraînement motorisé.

Le domaine technique de la présente invention est celui des dispositifs d'occultation qui comprennent un dispositif d'entraînement motorisé mettant en mouvement un écran, entre une première position et au moins une deuxième position.

Dans ce genre de dispositif, il est connu d'utiliser un actionneur électromécanique pour entraîner un arbre d'enroulement sur lequel est fixé l'écran.

Un tel écran peut être, par exemple, un store, un volet roulant ou une grille.

Le dispositif d'occultation est relié à un bâti par un dispositif de fixation. Le bâti peut être un mur, par exemple en béton, bois, plâtre ou brique. Le dispositif d'occultation peut être monté sur le bâti au moyen d'une équerre métallique.

Un actionneur électromécanique comprend un moteur électrique qui, en fonctionnement, génère des vibrations. Ces vibrations sont susceptibles d'être transmises aux éléments qui sont liés au moteur électrique, notamment un carter tubulaire de l'actionneur électromécanique, une tête d'actionneur électromécanique et/ou le tube d'enroulement, ce qui génère du bruit lorsqu'un dispositif d'occultation incorporant un tel actionneur est utilisé. Ces vibrations peuvent se transmettre mécaniquement jusqu'au bâti et le bruit généré est amplifié. La voie de transfert vibratoire privilégiée est la tête d'actionneur.

Cette problématique est abordée dans WO2018/104488A1 qui prévoit d'insérer un module de suspension d'un moteur électrique à l'intérieur d'un carter tubulaire d'un actionneur électromécanique. Cet organe de suspension comprend plusieurs plateaux annulaires disposés perpendiculairement à un actionneur longitudinal et juxtaposés le long de cet axe. Cette solution est robuste et présente une bonne répétabilité, tout en étant simple à mettre en œuvre. Toutefois, cette solution augmente la longueur totale de l'actionneur et requiert un moule d'injection complexe pour fabriquer le module de suspension.

D'autre part, WO2020/025711A1 divulgue un module mécanique de filtrage de vibrations pour un actionneur électromécanique qui comprend deux portions d'extrémité de diamètre plus important qu'une portion centrale. Le module mécanique de filtrage de vibrations peut être facilement adapté à ses conditions d'utilisation, en jouant sur le diamètre des portions d'extrémité et/ou la longueur de la portion centrale.

WO2020/064882A1 présente une autre solution, dans laquelle le module de filtration comprend des bagues respectivement fixées à un carter et à un arbre d'une tête de l'actionneur. Cette solution est relativement compacte et repose sur une fonction de rotule d'une liaison entre différentes parties du module de filtration, en utilisant les propriétés d'atténuation des vibrations d'un matériau élastomère. Ces propriétés peuvent varier dans le temps, ce qui risque d'induire une dégradation des performances de filtration avec le vieillissement du module de filtration.

CN208226759U montre, quant à lui, l'utilisation d'un élément absorbant inséré entre le carter de l'actionneur et un motoréducteur. CN215897475U divulgue l'utilisation d'une structure destinée à réduire les vibrations et qui comprend plusieurs organes amortissants. De façon générale, l'utilisation d'éléments de filtration au sein d'un actionneur est également connue de WO2005/090736A1.

Ces matériels connus donnent globalement satisfaction. Toutefois, l'incorporation d'un organe de découplage de vibrations au sein d'un actionneur électromécanique tend à augmenter sa longueur axiale, ce qui peut poser des problèmes en termes d'encombrement. En plus des problèmes de longueur, l'incorporation d'un organe de découplage de vibrations nécessite des étapes d'assemblage spécifiques. Cet assemblage nécessite par ailleurs de prévoir des interfaces de fixation entre certaines pièces. Ces interfaces ne contribuent pas à l'objectif de réduction de vibration, au contraire, et augmentent de surcroit la longueur de l'actionneur électromécanique. Ces interfaces sont en effet parfois sujettes à des défauts de qualité de conception ou de montage en usine et peuvent contribuer négativement à l'objectif de réduction de vibrations. D'autre part, les éléments de filtration doivent être adaptés à chaque conception spécifique d'actionneur électromécanique pour être performants.

C'est à ces inconvénients qu'entend plus particulièrement remédier l'invention en proposant un nouvel actionneur électromécanique qui comprend un organe de filtrage de vibrations et qui est compact et adapté à la conception spécifique de l'actionneur électromécanique, pour maintenir un niveau de performance élevé du filtrage mécanique des vibrations et de transfert d'effort.

A cet effet, l'invention concerne un actionneur électromécanique d'un dispositif d'occultation, cet actionneur comprenant au moins un moteur électrique, un carter, une carte électronique de commande et un organe de filtrage mécanique de vibrations, le moteur électrique, la carte électronique de commande et l'organe de filtrage étant montés à l'intérieur du carter, en configuration assemblée de l'actionner électromécanique. Conformément à l'invention, l'organe de filtrage mécanique comprend une première partie formant un filtre mécanique et une deuxième partie définissant un volume de réception de la carte électronique et en ce que l'organe de filtrage mécanique est monobloc.

Grâce à l'invention, l'organe de filtrage mécanique peut établir la liaison entre la tête de l'actionneur et son carter, tout en supportant efficacement la carte électronique de commande grâce à sa deuxième partie, sans augmenter sensiblement la longueur de l'actionneur par rapport à un actionneur comprenant une carte électronique de commande et dépourvu d'organe de filtrage mécanique. La présente invention permet d'intégrer la fonction de filtrage mécanique directement entre une tête de l'actionneur et le support de carte électronique. Comme l'organe de filtrage mécanique est monobloc, il n'est pas nécessaire de prévoir des moyens d'assemblage entre, d'une part, un organe de filtrage et, d'autre part, un support de la carte électronique. Ceci permet de gagner en compacité axiale pour l'actionneur électromécanique.

Selon des aspects avantageux mais non obligatoires de l'invention, un tel actionneur électromécanique peut incorporer une ou plusieurs des caractéristiques suivantes, prises dans toute combinaison techniquement admissible :
- La première partie de l'organe de filtrage mécanique est solidaire d'une tête de l'actionneur électromécanique et disposée, le long d'un axe longitudinal de l'organe de filtrage mécanique, entre la tête de l'actionneur et la deuxième partie.
- La première partie de l'organe de filtrage mécanique est annulaire, alors que la deuxième partie de l'organe de filtrage mécanique est globalement en forme de demi-cylindre.
- Une extrémité de la première partie de l'organe de filtrage mécanique et une extrémité de la deuxième partie de l'organe de filtrage mécanique sont communes et forment un anneau.
- La première partie est pourvue de fentes et de charnières disposées aux extrémités des fentes.
- Les fentes s'étendent chacune selon une direction circonférentielle autour d'un axe longitudinal de l'organe de filtrage mécanique.
- Deux fentes et deux charnières sont ménagées dans un même plan orthogonal à un axe longitudinal de l'organe de filtrage mécanique.
- Des fentes et des charnières sont ménagées dans au moins deux plans orthogonaux à un axe longitudinal de l'organe de filtrage mécanique et les fentes et charnières ménagées dans un premier plan orthogonal à l'axe longitudinal sont décalées angulairement, de préférence de 90°, par rapport aux fentes et charnières ménagées dans un deuxième plan orthogonal à l'axe longitudinal.
- Des coussinets amortisseurs sont montés autour de l'organe de filtrage mécanique et interposés entre cet organe et une surface radiale interne du carter, aux deux extrémités longitudinales de cet organe.

Selon un deuxième aspect, l'invention concerne un dispositif d'entraînement motorisé pour l'entraînement d'un écran d'un dispositif d'occultation, entre au moins une première position et au moins une deuxième position, comprenant un tube d'enroulement de l'écran et un actionneur tel que décrit précédemment engagé dans le tube d'enroulement et supporté, par rapport à une structure porteuse, au moyen d'une tête de l'actionneur engagée au moins partiellement dans la première partie de l'organe de filtrage mécanique de l'actionneur.

Selon un troisième aspect, l'invention concerne un dispositif d'occultation comprenant un écran mobile entre au moins une première position et au moins une deuxième position et un dispositif d'entraînement motorisé de l'écran entre ses première et deuxième positions, qui est tel que décrit ci-dessus.

L'invention sera mieux comprise et d'autres avantages de celle-ci apparaîtront plus clairement à la lecture de la description qui va suivre d'un mode de réalisation d'un actionneur électromécanique, d'un dispositif d'entraînement motorisé et d'un dispositif d'occultation conformes à son principe, donnée uniquement à titre d'exemple et faite en référence aux dessins annexés dans lesquels :
[Fig. 1] la figure 1 est une vue partielle en perspective d'un dispositif d'occultation conforme à l'invention, incorporant un actionneur électromécanique et un dispositif d'entraînement également conformes à l'invention ;
[Fig. 2] la figure 2 est une vue en perspective de l'actionneur et d'un tube d'enroulement du dispositif d'occultation de la figure 1, qui forment ensemble un dispositif d'entraînement motorisé conforme à l'invention ;
[Fig. 3] la figure 3 est une coupe longitudinale de l'actionneur de la figure 2, selon le plan III sur cette figure ;
[Fig. 4] la figure 4 est une coupe en perspective correspondant à la partie supérieure de la figure 3 ;
[Fig. 5] la figure 5 est une vue en perspective d'un organe de filtrage mécanique, d'une carte électronique de commande et de divers accessoires appartenant à l'actionneur électromécanique des figures 2 à 4 ;
[Fig. 6] la figure 6 est une vue en perspective de l'organe de filtrage mécanique seul ; et
[Fig. 7] la figure 7 représente, sur deux inserts A) et B), une partie de l'organe de filtrage mécanique de la figure 6 dans deux configurations de fonctionnement distinctes.

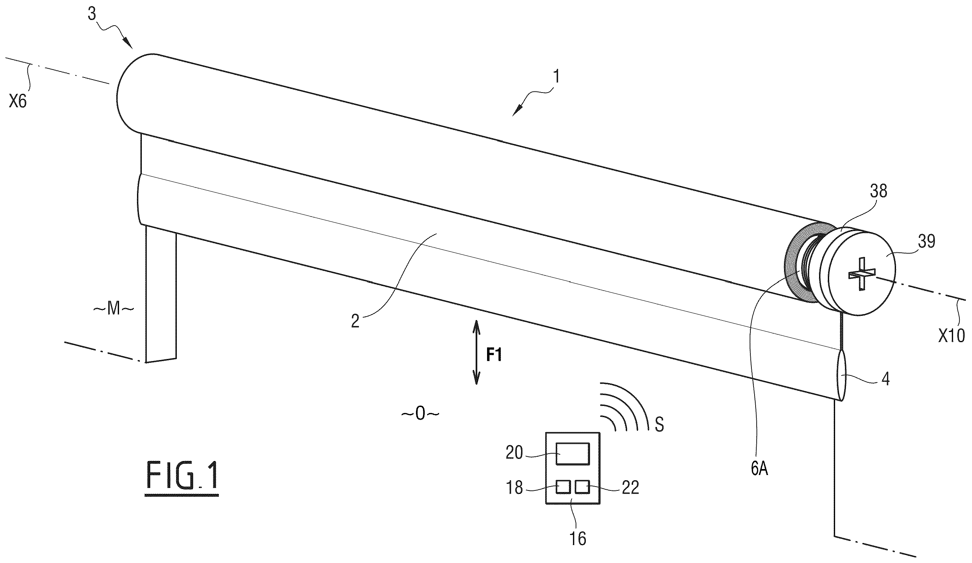

On décrit tout d'abord, en référence à la figure 1, une installation 1 comprenant un dispositif de fermeture, d'occultation ou de protection solaire 3 conforme à un premier mode de réalisation de l'invention. Cette installation 1 est mise en œuvre dans un bâtiment représenté par un de ses murs M qui comporte une ouverture O dans laquelle est disposée une fenêtre ou une porte, non représentée. Cette installation 1 est équipée d'un écran 2 qui appartient au dispositif de fermeture, d'occultation ou de protection solaire 3, lequel constitue, par exemple, un store motorisé.

L'écran 2 est configuré pour occulter, au moins partiellement, l'ouverture O ménagée dans le mur M, en étant dans des positions sélectionnées par un utilisateur, entre une position de fin de course haute et une position de fin de course basse.

Le dispositif de fermeture, d'occultation ou de protection solaire 3 est dans la suite dénommé « dispositif d'occultation » et comprend l'écran 2. L'expression « dispositif d'occultation » couvre donc les dispositifs de fermeture ou de protection solaire.

Ici, l'écran 2 peut être formé d'une toile, tissée ou non, et comprend une barre de charge 4 qui assure une tension d'une partie de l'écran 2 déroulée par rapport à un tube d'enroulement 6, mobile en rotation autour d'un axe d'enroulement X6 qui est horizontal en configuration montée de l'installation 1.

En fonction de la rotation du tube d'enroulement 6 autour de l'axe d'enroulement X6, une partie plus ou moins importante de l'écran 2 est déroulée et suspendue en dessous du tube d'enroulement 6 et la barre de charge 4 est déplacée verticalement, dans le sens de la double flèche F1 à la figure 1.

Un actionneur électromécanique 10 est disposé dans le tube d'enroulement 6.

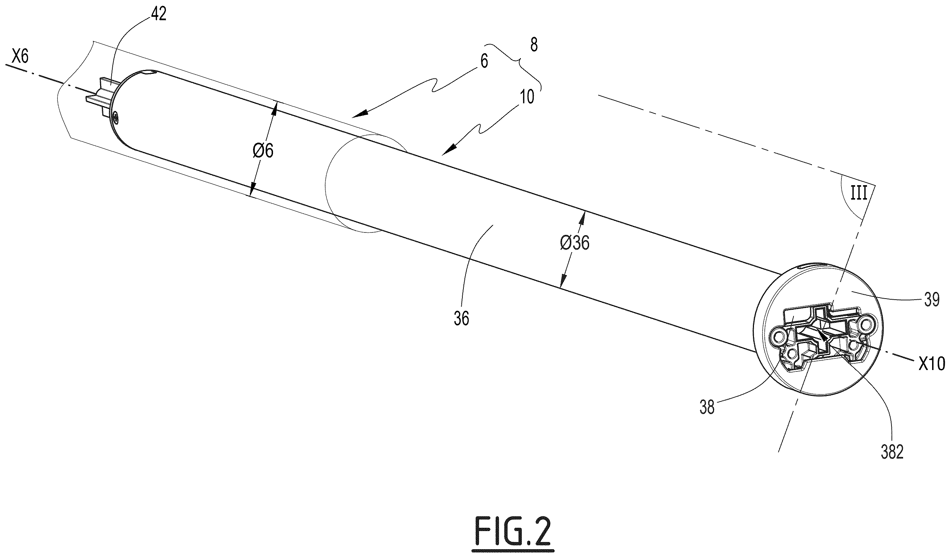

Le tube d'enroulement 6 est représenté transparent, décalé axialement vers la gauche et de façon partielle à la figure 2, pour permettre la visualisation complète de l'actionneur électromécanique 10.

L'actionneur électromécanique 10 comprend un moteur électrique 12. Avantageusement, le moteur électrique 12 comprend un rotor 12A et un stator 12B, qui sont positionnés de manière coaxiale autour d'un axe de rotation X10 de l'actionneur électromécanique 10.

Les axes X6 et X10 sont confondus en configuration montée du dispositif d'occultation 3 au sein de l'installation 1.

Avantageusement, le moteur électrique 12 est de type sans balais à commutation électronique, appelé également « BLDC » ou « synchrone à aimants permanents ». En variante, le moteur électrique 12 peut être à courant continu ou asynchrone, alimenté par un courant alternatif.

L'actionneur électromécanique 10 comprend également une unité de contrôle électronique 14 configurée pour piloter le moteur électrique 12 à partir d'ordres de commande reçus d'une unité de commande 16, qui peut être une unité de commande locale ou centrale, fixe ou mobile. De préférence, l'unité de contrôle électronique 14 comprend une carte électronique de commande équipée 142 de composants électroniques 144, dont un microprocesseur 146.

La carte électronique 142 peut également être dénommée carte de circuit imprimée ou PCB de l'Anglais « Printed Circuit Board ».

Avantageusement, l'unité de commande 16 est équipée d'au moins un élément de sélection 18 et d'au moins un élément d'affichage 20. L'unité de commande 16 comprend également un premier module de communication à distance 22 capable d'émettre, et éventuellement de recevoir, des signaux électromagnétiques S, en particulier radios, à destination de l'unité de contrôle électronique 14 ou provenant de celle-ci.

A cet égard, l'unité de contrôle électronique 14 est équipée d'un deuxième module de communication 148 capable de recevoir les signaux électromagnétiques S, en particulier radios, et, éventuellement, d'émettre des signaux en retour à destination de l'unité de commande 16, en cas de communication bidirectionnelle entre le l'unité contrôle électronique 14 et l'unité de commande 16.

Le deuxième module de communication 148 est l'un des composants électronique 144 de l'unité de contrôle électronique 14.

Avantageusement, pour pouvoir efficacement communiquer avec le module de communication 22, le module de communication 24 est raccordé à une antenne non représentée qui s'étend pour partie dans le tube d'enroulement 6 et pour partie à l'extérieur du tube d'enroulement.

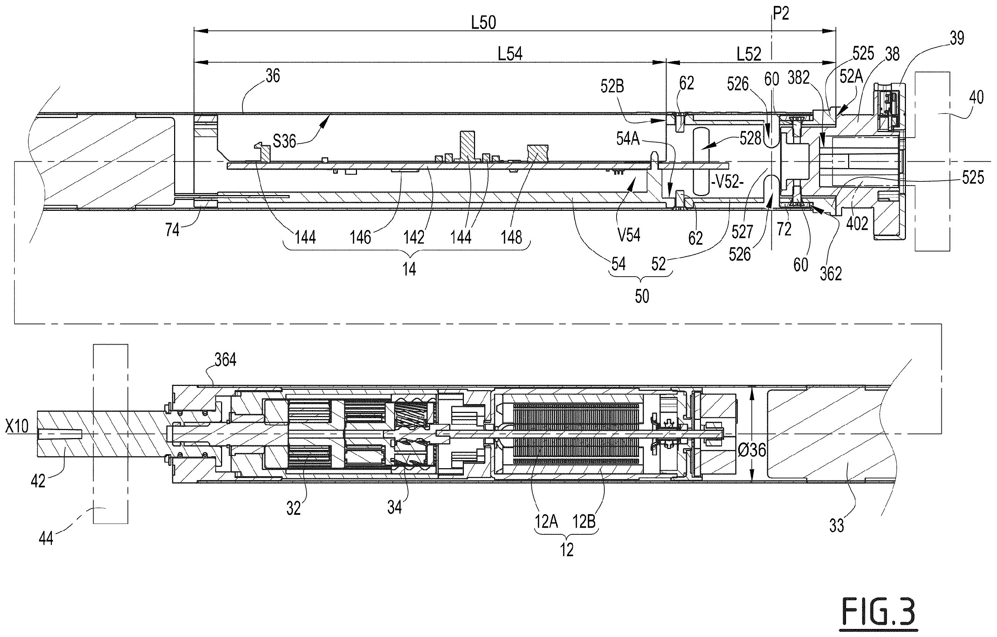

L'actionneur électromécanique 10 comprend également un réducteur 32, une source d'énergie, telle qu'un ensemble de batteries 33, et un frein 34. La source d'énergie est représentée par son enveloppe extérieure à la figure 3.

Le réducteur 32 comprend au moins un étage de réduction, par exemple de type épicycloïdal, voire d'un autre type. Le frein 34 permet de contrôler la vitesse de rotation du tube d'enroulement 6 autour de l'axe d'enroulement X6 ou de bloquer la rotation de ce tube.

Ici, l'ensemble de batteries 33 est positionné, le long de l'axe X10, entre le moteur électrique 12 et l'unité de contrôle électronique 14. En variante non représentée de l'invention, l'ensemble de batteries 33 peut être positionné, le long de l'axe X10, entre le moteur électrique 12 et le frein 34. Selon une autre variante non-représentée, l'ensemble de batteries 33 est positionné, le long de l'axe X10, à l'opposé du moteur électrique 12 par rapport à l'unité de contrôle électronique 14.

Ici, le frein 34 est positionné, le long de l'axe X10, entre le moteur électrique 12 et le réducteur 32. En variante non représentée de l'invention, le réducteur 32 peut être positionné, le long de l'axe X10, entre le moteur électrique 12 et le frein 34. Selon une autre variante non-représentée, le frein est positionné, le long de l'axe X10, entre deux étages du réducteur 32.

L'actionneur 10 comprend également un carter 36 dans lequel sont disposés les éléments 12, 14, 32, 33 et 34 et qui s'étend, entre une première extrémité axiale 362 et une deuxième extrémité axiale 364 opposée à la première extrémité axiale, le long de l'axe X10. L'extrémité axiale 362 du carter 36 est orientée du même côté qu'une extrémité axiale 6A du tube d'enroulement 6 visible à la figure 1.

L'antenne non représentée s'étend également pour partie à l'extérieur du carter 36.

Le carter 36 est de forme cylindrique, de préférence à section circulaire. Il peut être réalisé en métal ou en matériau plastique. Le diamètre externe Φ36 du carter 36 est strictement inférieur au diamètre interne Φ6 du tube d'enroulement. L'actionneur électromécanique est dit tubulaire, en ce que le diamètre externe Φ36 de son carter 36 est largement plus petit que sa longueur axiale, prise le long de l'axe X10.

Dans l'exemple des figures, le diamètre externe Φ36 vaut 25 mm. Ceci confère une bonne compacité radiale à l'actionneur électromagnétique 10, compatible avec des tubes d'enroulement 6 de diamètre interne Φ6 relativement petit, notamment égal à 28 mm. Toutefois, la solution est également applicable à d'autres diamètres externes d'actionneurs électromécaniques tubulaires.

En variante, la solution est également applicable à un actionneur autre que tubulaire, dont le carter présente un diamètre du même ordre de grandeur que sa longueur axiale ou à un actionneur dont le carter présente une section polygonale.

Une couronne-palier non représentée est disposée autour de l'extrémité 362 du carter 36 et à l'intérieur de l'extrémité 6A du tube d'enroulement 6 qu'elle supporte, avec possibilité de rotation du tube d'enroulement 6 autour de l'axe X10, par rapport au carter 36.

Une tête d'actionneur 38 appartient également à l'actionneur 10 et permet de maintenir celui-ci en position à l'intérieur de l'arbre d'enroulement 6. La tête d'actionneur 38 est engagée dans le carter 36, du côté de sa première extrémité 362.

La tête d'actionneur 38 permet notamment d'accrocher l'actionneur 10 sur un support 40 qui peut être monté sur le mur M ou sur un flasque d'un caisson non-représenté qui entoure le tube d'enroulement 6 ou sur une équerre de support non-représentée, elle-même montée sur le mur ou suspendue à un plafond. A cet effet, la tête d'actionneur 38 est pourvue d'un logement 382 configuré pour recevoir un ou plusieurs pions de centrage 402 porté(s) par le support 40. La tête d'actionneur 38 assure donc, notamment, une fonction de support mécanique et de reprise d'efforts pour l'actionneur électromécanique 10. En outre, la tête d'actionneur 38 et le support 40 constituent ensemble un point de référence pour le moteur électrique 12.

Pour la clarté du dessin, le support 40 et son pion 402 ne sont représentés qu'à la figure 3, en traits mixtes.

Un couvercle 39, qui fait partie de l'actionneur électromécanique 10, est rapporté, de préférence de façon amovible, sur la tête d'actionneur 38, du côté de cette tête opposée au carter 36.

Un arbre de sortie 42 de l'actionneur électromécanique 10 fait saillie du carter 36, à l'opposé de la tête d'actionneur 38, c'est-à-dire du côté de la deuxième extrémité 364 de ce carter. L'arbre de sortie est configuré pour être entraîné en rotation par le moteur électrique 12, autour de l'axe de rotation X10, à travers le frein 34 et le réducteur 32.

Cet arbre de sortie 42 est équipé d'une roue de liaison 44 solidaire en rotation, autour de l'axe d'enroulement X6, du tube d'enroulement 6. Pour la clarté du dessin, la roue de liaison 44 n'est représentée qu'à la figure 3, en traits mixtes.

Une rotation de l'arbre de sortie 42 autour de l'axe de rotation X10, qui résulte du fonctionnement du moteur électrique 12, a pour effet de faire tourner le tube d'enroulement 6 autour de l'axe d'enroulement X6 par l'intermédiaire de la roue de liaison 44, dans l'un de deux sens de rotation opposés, et de dérouler ou d'enrouler l'écran 2 autour du tube d'enroulement 6, en déplaçant la barre de charge 4 dans l'une des directions représentées par la double flèche F1 à la figure 1.

Ainsi, le tube d'enroulement 6 et l'actionneur électromécanique 10 appartiennent à un dispositif d'entraînement motorisé 8, qui permet de déplacer sélectivement l'écran 2 entre des positions choisies par l'utilisateur du dispositif d'occultation 3.

Lorsque l'actionneur électromécanique 10 entraîne son arbre de sortie 42 en rotation autour de l'axe de rotation X10, des vibrations sont générées. Ces vibrations sont notamment dues au fonctionnement du moteur électrique 12, aux efforts de contact d'engrènement du réducteur 32 et/ou aux frottements discontinus du frein 34.

Un organe de filtrage mécanique 50 est monté à l'intérieur du carter 36 et a pour fonction de filtrer, en d'autres termes d'atténuer et/ou d'amortir, voire de supprimer, les vibrations précitées, afin qu'elles se propagent le moins possible à l'extérieur du carter 36.

L'organe de filtrage mécanique 50 est réalisé dans un matériau élastiquement déformable dans les conditions normales d'utilisation de l'actionneur électromécanique 10. A titre d'exemple, le matériau constitutif de l'organe de filtrage mécanique 50 peut être un polyoxyméthylène (POM), notamment un homopolymère POM-H également appelé Delrin.

On note X50 un axe longitudinal de l'organe de filtrage mécanique 50. En configuration montée de l'actionneur électromécanique 10, les axes X10 et X50 sont confondus.

L'organe de filtrage mécanique 50 comprend une première partie 52 et une deuxième partie 54 qui sont réalisées d'une seule pièce. En d'autres termes, les parties 52 et 54 de l'organe de filtrage mécanique 50 sont monoblocs entre elles, ce qui participe à la compacité axiale de l'actionneur, c'est-à-dire à sa compacité le long de l'axe de rotation X10.

La première partie 52 est la plus proche de la tête d'actionneur 38 en configuration montée de l'actionneur électromécanique 10 et peut, à ce titre, être qualifiée de partie proximale. A l'inverse, la deuxième partie 54 est la plus éloignée de la tête d'actionneur 38 en configuration montée de l'actionneur électromécanique 10 et peut, à ce titre, être qualifiée de partie distale.

La première partie 52 est tubulaire et s'étend circonférentiellement autour de l'axe longitudinal X50 sur 360°. D'autre part, la deuxième partie 54 est sensiblement en forme de demi-cylindre, en particulier à génératrice semi-circulaire. Elle définit un volume V54 de réception au moins partielle de la carte électronique 144 et des composants 144.

On note 52A une première extrémité de la première partie 52 opposée à la deuxième partie 54. La première extrémité 52A est, en pratique, formée par une collerette annulaire 521 qui entoure un orifice circulaire O52 d'introduction d'une partie de la tête d'actionneur 38 au sein de la première partie 52.

On note 52B une deuxième extrémité de la première partie 52, qui est opposée à la première extrémité 52A. La deuxième extrémité 52B entoure un orifice circulaire O'52 d'accès à un volume interne V52 de la première partie 52, à l'opposé de l'orifice circulaire O52.

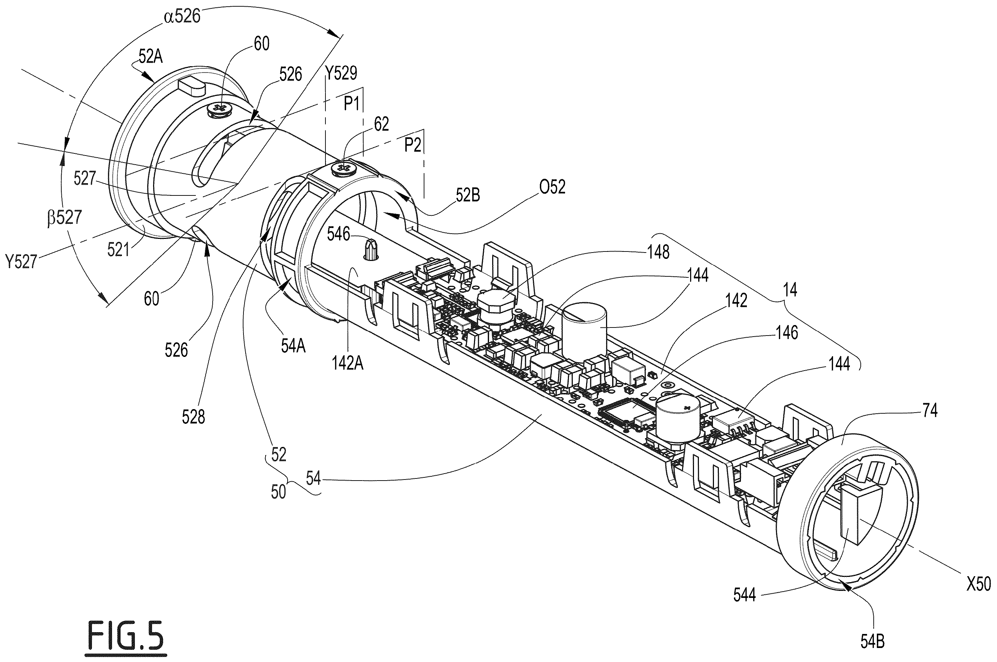

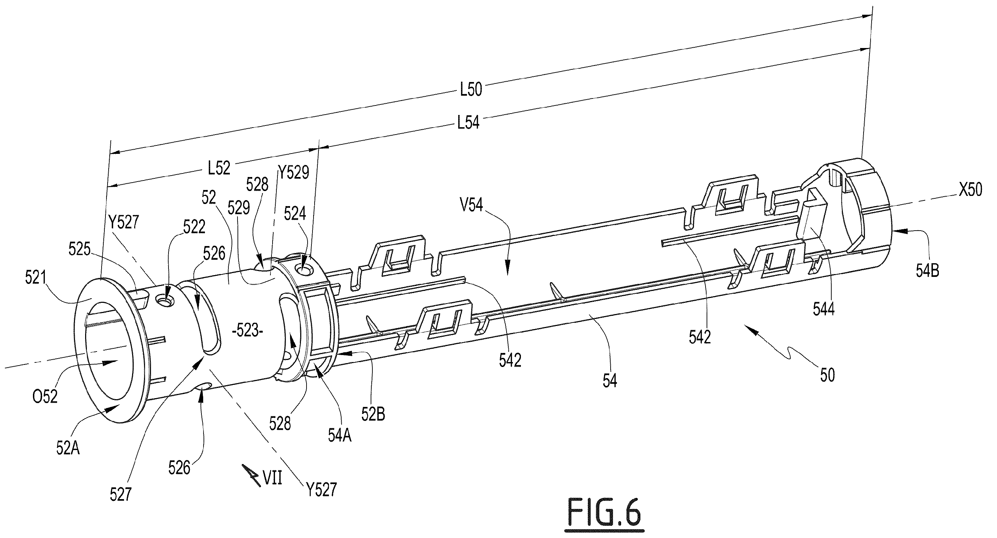

La deuxième extrémité 52B est visible à la figure 5, alors que la première extrémité 52A est visible à la figure 6.

Avantageusement, la deuxième extrémité 52B de la première partie 52 forme également une première extrémité 54A de la deuxième partie 54. Autrement dit, les deux parties 52 et 54 sont communes au niveau de la deuxième extrémité 52B et de la première extrémité 54A qui forment un anneau supportant d'une part et d'autre part le cylindre de la première partie 52 et le demi-cylindre de la deuxième partie 54. La deuxième extrémité 52B assure ainsi le maintien de la deuxième partie 54 et assure le contact avec le carter 36, par sa surface extérieure qui peut par exemple être munie de godrons. La première partie 52 est pourvue de deux orifices diamétralement opposés par rapport à l'axe longitudinal X50 et dont un seul est visible à la figure 6 avec la référence 522. Chacun des orifices 522 et équivalent reçoit une vis 60 de fixation de la première partie 52 sur la tête d'actionneur 38.

Ainsi, l'organe de filtrage mécanique 50, plus particulièrement sa première partie 52, peut être monté et immobilisé sur la tête d'actionneur 38 grâce aux vis 60.

D'autre part, la partie 52 est pourvue de deux autres orifices diamétralement opposés par rapport à l'axe longitudinal X50, dont un seul est visible sur la figure 6, avec la référence 524. Chaque orifice 524 reçoit une vis 62 de fixation du carter 36 sur la partie 52.

Ainsi, l'organe de filtrage mécanique 50, plus particulièrement sa première partie 52, peut être monté et immobilisé sur le carter 36 grâce aux vis 62. L'organe de filtrage mécanique 50 est en contact avec le carter 36 dans une zone de contact matérialisée par la deuxième extrémité 52B de la première partie 52 et par les vis 62 et dispose ainsi d'un degré de liberté autour de cette zone de contact. Cette situation permet d'imposer des efforts de torsion à la première partie 52.

Les orifices 522 et équivalent sont ménagés au voisinage de la première extrémité 52A, alors que les orifices 524 et équivalent sont ménagés au voisinage de la deuxième extrémité 52B.

A la figure 5, les vis 60 et 62 sont montrées en position dans les orifices 522 et 524, alors que le carter 36 et la tête d'actionneur 38 ne sont pas représentés.

L'organe de filtrage mécanique 50 est également pourvu au voisinage de sa première extrémité 52A de deux talons 525, diamétralement opposés et qui sont destinés à être engagés dans des encoches non-représentées du carter 36, ce qui permet d'assurer un blocage en rotation du carter 36 sur l'organe de filtrage mécanique 50, avant mise en place des vis de fixation 62.

Les talons 525 constituent des crans de reprise de couple entre l'organe de filtrage mécanique 50 et le carter 36 et permettent d'éviter une dérive angulaire de ces éléments l'un par rapport à l'autre. En effet, il existe un jeu fonctionnel entre les talons 525 et le carter 36 afin d'assurer une reprise du couple de torsion exercé au sein de la première partie 52. Ce jeu fonctionnel est nécessaire au bon fonctionnement du filtre mécanique constitué par la première partie 52, mais ne doit pas pour autant conduire à une dérive angulaire de ces pièces au cours du temps.

La première partie 52 de l'organe de filtrage 50 forme un filtre mécanique de vibrations formant un organe de liaison entre le carter 36 et la tête d'actionneur 38, ce qui lui permet d'agir pour amortir des vibrations susceptibles de se propager entre le carter 36 et la tête d'actionneur 38.

On note L52 la longueur de la première partie 52 de l'organe de filtrage mécanique 50. On note L54 la longueur de la deuxième partie 54 de l'organe de filtrage 50. On note L50 la longueur totale de l'organe de filtrage mécanique 50. Les longueurs L50, L52 et L54 sont mesurées parallèlement à l'axe longitudinal X50. D'autre part, la longueur L50 est égale à la somme des longueurs L52 et L54. En d'autres termes, on a la relation suivante : $L 50 = L 52 + L 54 .$

La longueur L52 est mesurée entre les extrémités 52A et 52B.

La longueur L52 ne représente qu'une partie relativement faible de la longueur L50. En d'autres termes, la partie de l'organe de filtrage mécanique 50 qui sert à filtrer ou amortir les vibrations entre les éléments 36 et 38 a une longueur L52 relativement faible par rapport à la longueur totale L50 de l'organe de filtrage mécanique 50 qui est monobloc.

En pratique, la longueur 54 est déterminée de sorte à pouvoir accueillir la carte électronique 142, celle-ci étant définie par rapport au besoin de composants électroniques et à l'implantation choisie de ceux-ci sur la carte électronique 142. La longueur L52 est déterminée en fonction des efforts à supporter entre le carter 36 et la tête d'actionneur 38. Cette longueur L52 est également déterminée en tenant compte de la plus basse fréquence de filtration recherchée. Cette longueur L52 peut donc être adaptée en fonction de la configuration exacte de l'actionneur électromécanique 10, notamment de ses éléments constitutifs 12, 32 à 34, 42 et 44 et du besoin d'atténuation des vibrations.

On note 523 une paroi cylindrique annulaire de la première partie 52 qui entoure l'axe longitudinal X50 et le volume interne V52 de la première partie 52.

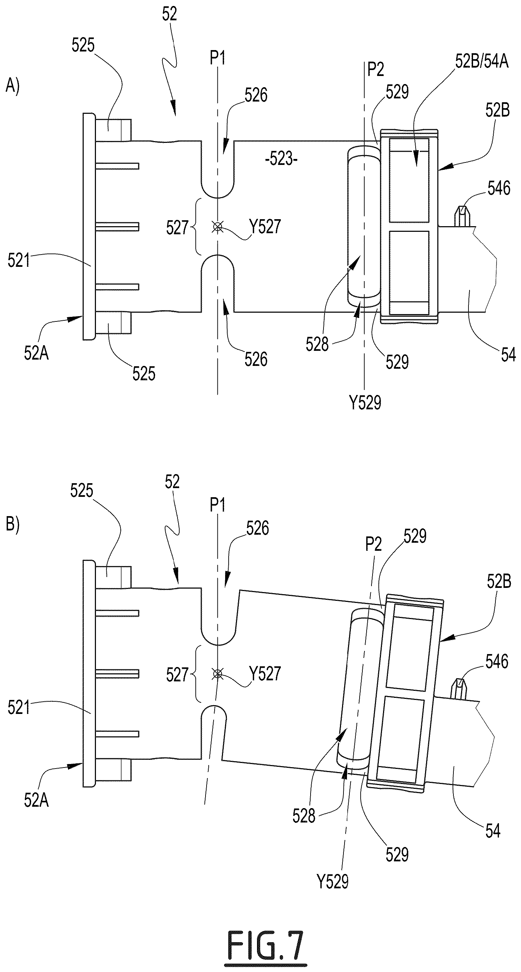

La paroi 523 est percée de deux fentes 526 qui sont ménagées dans un même plan P1 perpendiculaire à l'axe X100. Les deux fentes 526 s'étendent chacune selon une direction circonférentielle autour de l'axe X50, sur une amplitude angulaire α526 comprise entre 150° et 170°. Entre les deux fentes 526, la paroi 523 forme deux charnières 527 susceptibles de se déformer, comme cela ressort de la comparaison des inserts A) et B) de la figure 7. Chaque charnière 527 s'étend, dans le plan P1, sur une amplitude angulaire β527 comprise entre 20° et 60°.

Comme les fentes 526 sont identiques l'une avec l'autre, les charnières 527 sont diamétralement opposées par rapport à l'axe longitudinal X50, ce qui autorise une déformation élastique de ces charnières autour d'un axe Y527 radial à l'axe longitudinal X50 et passant par le centre des deux charnières 527. Cette déformation est visible en comparant les inserts A) et B) de la figure 7.

Dans un plan P2 parallèle au plan P1, la paroi 523 est percée de deux autres fentes 528 qui s'étendent chacune selon une direction circonférentielle autour de l'axe X50, sur une amplitude angulaire égale à celle des fentes 526. Les fentes 528 sont identiques et reliées par des charnières 529 formées par la paroi cylindrique 523 et qui sont susceptibles de se déformer, comme les charnières 527. Les charnières 529 s'étendent chacune sur une amplitude angulaire égale à celle des charnières 527.

Les charnières 529 sont diamétralement opposées et elles peuvent se déformer élastiquement autour d'un Y529, radial à l'axe longitudinal X50.

En pratique, sur 360° de circonférence et dans chacun des plans P1 et P2, on retrouve une succession d'une première fente 526 ou 528, d'une première charnière 527 ou 529, d'une deuxième fente 526 ou 528 et d'une deuxième charnière 527 ou 529.

Avantageusement, chacun des plans P1 et P2 est orthogonal à l'axe longitudinal X50.

Les fentes 528 sont décalées angulairement, autour de l'axe longitudinal X100, par rapport aux fentes 526. En pratique, le décalage angulaire entre les fentes 526 et 528 est avantageusement choisi égal à 90°.

Ainsi, les axes Y527 et Y529 sont perpendiculaires.

Comme visible notamment sur les figures 5 et 7, les charnières 527 sont alignées sur les fentes 528 selon une première direction parallèle à l'axe longitudinal X50, alors que les charnières 529 sont alignées sur les fentes 526 selon une deuxième direction parallèle à l'axe longitudinal X50.

Les fentes 526 et 528, d'une part, et les charnières 527 et 529, d'autre part, permettent à la première partie 52 de l'organe de filtrage mécanique 50 de se déformer pour couper dynamiquement, c'est-à-dire filtrer, les vibrations transmises par le carter 36, en limitant leur transmission vers la tête d'actionneur 38.

Le décalage axial, le long de l'axe longitudinal X50, et le décalage angulaire des fentes 526 et 528 autour de l'axe longitudinal X50 permet de créer un filtre vibratoire axial au niveau de la première partie 52. En effet, lorsque la zone de la première partie 52 la plus proche de sa deuxième extrémité 52B tend à tourner autour de l'axe longitudinal X50 par rapport à la collerette 521, ou à fléchir par rapport à cette collerette, la première partie 52 peut accompagner ce mouvement grâce à la déformation élastique des charnières 527 et à l'écartement ou au rapprochement des bords des fentes 526 et/ou 529, comme montré à la figure 7.

Grâce à l'utilisation de l'organe de filtrage mécanique 50, en particulier de sa première partie 52, on obtient un découplage vibratoire au sein de l'actionneur électromécanique 10 entre le moteur électrique 12, relié de manière rigide au carter et la tête d'actionneur 38, et le support 40.

Le volume V54 défini par la deuxième partie 54 permet d'accommoder la carte électronique 142 sans devoir installer dans le carter 36 un élément de support distinct de l'organe de filtrage mécanique 50.

Comme représenté aux figures 3 à 5, une partie 142A de la carte électronique 142 peut pénétrer à l'intérieur de la première partie 52, dans le volume interne V52, ce qui permet de diminuer la longueur totale L50 de l'organe de filtrage mécanique 50, tout en conservant une carte électronique 142 de dimensions suffisantes pour accommoder tous les composants électroniques 144 nécessaires à sa fonction.

Pour assurer le maintien en position de la carte électronique 142 dans le volume V54, la deuxième partie 54 de l'organe de filtrage mécanique 50 est équipée de nervures internes 542 et d'une butée axiale 544. Un pion de centrage 546 est avantageusement prévu pour traverser la partie 142A de la carte électronique 142 engagée dans le volume interne V52 de la première partie 52. Le pion de centrage 546 et la butée axiale 544 permettent de bloquer la carte électronique 142 en rotation dans le volume V54. Les nervures internes 542 permettent de positionner la carte électronique 142 transversalement à l'axe longitudinal X50. Des organes de clippage permettent de retenir la carte électronique 142 dans le sens inverse.

La deuxième partie 54 de l'organe de filtrage mécanique 50 ne se déforme pas lors de la filtration des vibrations par la première partie 52. Ceci garantit l'intégrité physique de l'unité de contrôle électronique 14, en particulier en évitant des contraintes mécaniques sur la carte électronique 142 et les composants 144.

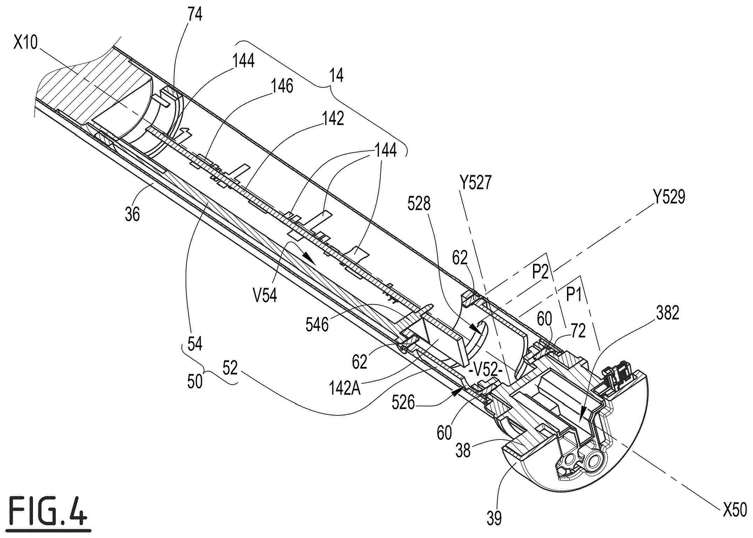

Un coussinet de positionnement 72, de préférence en forme d'anneau, est disposé radialement entre la première partie 52 de l'organe de filtrage mécanique 50 et une surface radiale interne S36 du carter 36, au niveau des orifices 522 et des vis 60 le long de l'axe longitudinal X50. Ce coussinet 72 est prévu pour se déformer afin de procurer un degré de liberté entre le carter 36 et l'organe de filtrage mécanique 50, au voisinage de la zone de jonction entre la tête d'actionneur 38 et l'organe de filtrage mécanique 50. Le coussinet 72 est visible uniquement aux figures 3 et 4. Pour la clarté du dessin, il n'est pas représenté à la figure 5.

D'autres part, un deuxième coussinet de positionnement 74, de préférence en forme d'anneau, est monté au voisinage de la deuxième extrémité 54B de la deuxième partie 54 opposée à la première partie 52. Ce deuxième coussinet 74 est inséré radialement entre la deuxième extrémité 54B et la surface radiale interne S36 du carter 36. Ce deuxième coussinet 74 procure également un degré de liberté au positionnement de l'organe de filtrage mécanique 50 à l'intérieur du carter 36.

Les deux coussinets sont montés autour de l'organe de filtrage mécanique 50 et interposés entre cet organe et la surface radiale interne S36 du carter 36, aux deux extrémités longitudinales de cet organe.

En pratique, les deux coussinets 72 et 74 sont réalisé dans un matériau plus souple que celui de l'organe de filtrage mécanique 50, par exemple en élastomère ou caoutchouc ou TPU.

Ces deux coussinets 72 et 74 permettent de répondre à deux besoins : un premier besoin de mobilité, sans lequel l'organe de filtrage mécanique 50 ne peut pas fléchir et assurer son rôle, et un deuxième besoin d'amortissement sur ces zones de mobilité, pour éviter tout risque de contact non amorti.

Le coussinet 74 permet de plus d'éviter que des efforts de torsion ne soient transmis à la carte électronique 142 et le coussinet 72 contribue de son côté à filtrer les bruits aériens.

Les deux coussinets 72 et 74 permettent également de guider l'organe de filtrage mécanique 50 lors de sa mise en place à l'intérieur du carter 36 .

Selon un aspect de l'invention qui n'est pas représenté, des éléments de connectique non-représentés, notamment des nappes ou câbles d'alimentation, de données ou d'antenne, peuvent circuler à l'intérieur de la première partie 52 de l'organe de filtrage mécanique 50, afin de connecter une unité secondaire de contrôle électronique localisée dans la tête à l'unité de contrôle électronique 14 et/ou d'alimenter l'une et l'autre en courant ou en signaux. La partie 142A et ces éléments de connectique doivent être montés à distance de la paroi 523, des fentes 526 et 528 et des charnières 527 et 529, afin de ne pas interférer avec la fonction de filtre mécanique de la première partie 52. C'est pourquoi, la partie 142A de la carte électronique qui pénètre dans le volume interne V52 de la première partie 52 présente avantageusement une dimension transversale réduite par rapport à la partie principale de cette carte électronique logée dans le volume V54. De même, les câbles ou nappes sont dimensionnés pour être tendus en configuration montée de l'actionneur électromécanique 10 et de ce fait ne sont pas ou peu en contact avec la première partie 52 et n'interfèrent pas avec la fonction de filtre mécanique.

Grâce à l'utilisation de l'organe de filtrage mécanique monobloc 50, il est possible de réduire l'encombrement global de l'actionneur, notamment sa dimension axiale, tout en assurant, avec la première partie 52, une filtration efficace des vibrations au sein de l'actionneur.

D'autre part, le fait que l'ensemble de batterie 33 est disposé, par rapport à l'organe de filtrage mécanique 50, à l'opposé de la tête d'actionneur 38, permet de maximiser la masse et le volume de la carte électronique 142 et des éléments qu'elle supporte, ce qui permet de réduire une fréquence de coupure. En effet, la masse de la batterie impacte la masse de l'actionneur électromécanique 10 complet et, de la sorte, influence la fréquence de résonance et la fréquence de coupure.

L'invention présente également un avantage en termes de prix de revient puisqu'une seule pièce, de géométrie relativement simple à mouler, remplit une double fonction de filtrage mécanique et de support de la carte électronique 142.

L'invention permet également de diminuer le nombre d'étapes lors de l'assemblage de l'actionneur électromécanique 10 puisque la pièce 50 déjà équipée de la carte électronique 142 peut être mise en place en une opération au sein du carter 36.

Selon une variante non représentée de l'invention, la carte électronique est reçue en totalité dans le volume V54 de la deuxième partie et ne s'étend pas dans le volume interne V52 de la première partie 52.

Toute caractéristique décrite ci-dessus pour un mode de réalisation ou une variante est applicable aux autres modes de réalisation et variantes, pour autant que cela est techniquement possible.

## Revendications

1. Actionneur électromécanique (10) d'un dispositif d'occultation (3), cet actionneur comprenant au moins un moteur électrique (12), un carter (36), une carte électronique de commande (142) et un organe de filtrage mécanique de vibrations (50), le moteur électrique (12), la carte électronique de commande (142) et l'organe de filtrage (50) étant montés à l'intérieur du carter (36), en configuration assemblée de l'actionner électromécanique,
**caractérisé en ce que** l'organe de filtrage mécanique (50) comprend une première partie (52) formant un filtre mécanique et une deuxième partie définissant un volume (V54) de réception de la carte électronique (142) et **en ce que** l'organe de filtrage mécanique (50) est monobloc.

2. Actionneur électromécanique (10) selon la revendication 1, dans lequel la première partie (52) de l'organe de filtrage mécanique (50) est solidaire d'une tête (38) de l'actionneur électromécanique et disposée, le long d'un axe longitudinal (X50) de l'organe de filtrage mécanique (50), entre la tête (38) de l'actionneur et la deuxième partie (54).

3. Actionneur électromécanique (10) selon la revendication précédente, dans lequel la première partie (52) de l'organe de filtrage mécanique (50) est annulaire, alors que la deuxième partie (54) de l'organe de filtrage mécanique (50) est globalement en forme de demi-cylindre.

4. Actionneur électromécanique (10) selon la revendication précédente, dans lequel une extrémité (52B) de la première partie (52) de l'organe de filtrage mécanique (50) et une extrémité (54A) de la deuxième partie (54) de l'organe de filtrage mécanique sont communes et forment un anneau.

5. Actionneur électromécanique (10) selon l'une des revendications précédentes, dans lequel la première partie (52) est pourvue de fentes (526, 528) et de charnières (527, 529) disposées aux extrémités des fentes.

6. Actionneur électromécanique (10) selon la revendication précédente, dans lequel les fentes (526, 528) s'étendent chacune selon une direction circonférentielle autour d'un axe longitudinal (X50) de l'organe de filtrage mécanique (50).

7. Actionneur électromécanique (10) selon la revendication précédente, dans lequel deux fentes (526 ; 528) et deux charnières (527 ; 529) sont ménagées dans un même plan (P1 ; P2) orthogonal à un axe longitudinal (X50) de l'organe de filtrage mécanique (50).

8. Actionneur électromécanique (10) selon la revendication précédente, dans lequel des fentes (526, 528) et des charnières (527, 529) sont ménagées dans au moins deux plans (P1, P2) orthogonaux à un axe longitudinal (X50) de l'organe de filtrage mécanique (50) et dans lequel les fentes et charnières (526, 527) ménagées dans un premier plan (P1) orthogonal à l'axe longitudinal sont décalées angulairement, de préférence de 90°, par rapport aux fentes et charnières (528, 529) ménagées dans un deuxième plan (P2) orthogonal à l'axe longitudinal.

9. Actionneur électromécanique (10) selon l'une des revendications précédentes, dans lequel des coussinets amortisseurs (72, 74) sont montés autour de l'organe de filtrage mécanique (50) et interposés entre cet organe et une surface radiale interne (S36) du carter (36), aux deux extrémités longitudinales de cet organe.

10. Dispositif d'entraînement motorisé (8) pour l'entraînement d'un écran (2) d'un dispositif d'occultation, entre au moins une première position et au moins une deuxième position, comprenant un tube (6) d'enroulement de l'écran et un actionneur (10) selon l'une des revendications précédentes engagé dans le tube d'enroulement et supporté, par rapport à une structure porteuse, au moyen d'une tête (38) de l'actionneur engagée au moins partiellement dans la première partie (52) de l'organe de filtrage mécanique (50) de l'actionneur.

11. Dispositif d'occultation (3) comprenant
- un écran (2) mobile entre au moins une première position et au moins une deuxième position ;
- un dispositif d'entraînement motorisé (8) de l'écran entre ses première et deuxième positions, qui est selon la revendication précédente.
